# EUROPEAN PATENT SPECIFICATION

(11) **EP 3 127 094 B1**
(45) Date of publication and mention of the grant of the patent: **27.03.2019**
(21) Application number: 15773938.4
(22) Date of filing: 01.04.2015
(51) Int. Cl.: H04L 12/18, G08B 27/00

(54) **INTERNET PROTOCOL BASED AUDIO ALERT SYSTEM**
INTERNETPROTOKOLLBASIERTES AUDIOWARNSYSTEM
SYSTÈME D'ALERTE AUDIO BASÉ SUR UN PROTOCOLE INTERNET

(30) Priority: 01.04.2014 AU 2014901187
(43) Date of publication of application: 08.02.2017
(73) Proprietor: ICT Global Systems Pty Limited, North Sydney, NSW 2060 (AU)
(72) Inventor: THOMPSON, Paul, John, Baulkham Hills, NSW 2153 (AU); JOHNSON, Stephen, Yarrawarrah, NSW 2233 (AU)
(74) Representative: Harding, Andrew Philip
(86) International application number: PCT/AU2015/000187
(87) International publication number: WO 2015/149110

(56) References cited:
- WO-A1-2011/134045
- WO-A2-2005/091778
- WO-A2-2006/034246
- WO-A2-2008/008408
- US-A1- 2005 231 349
- US-A1- 2013 148 509
- US-B1- 6 518 878

## Description

### TECHNICAL FIELD

The present invention relates to audio alert, site security management systems and, in particular, to an internet protocol based audio alert system utilizing hardware and software that can operate on local area networks ("LAN"), wide area networks ("WAN") or over the "cloud" to provide alert messages or notifications across single or multiple sites for which security is sought.

### BACKGROUND OF THE INVENTION

Internet protocol based audio alert systems having a client-server computer architecture are known. Such systems may store alert messages centrally and transmit them across a network for broadcasting. However, the message broadcast response time may be slow, and there may be interference or queuing with other messages shared across the network. This results in either a delayed alert message broadcast or possibly an unintelligible alert message broadcast due to corruption of the digital signal if it is unable to be accurately converted back to analogue for broadcast. This situation is compounded when there are multiple message broadcast points or nodes, such as speakers in a multipole speaker system, as the alert message broadcast is unlikely to be synchronised causing additional intelligibility problems. Other factors, such as the distance between message broadcast points in a multipole speaker system, the ambient temperature variance between multiple message broadcast points and the ambient noise at each message broadcast point can all have an adverse effect on the reliability of the system to successfully deliver the alert message to its intended recipient(s).

US Patent Application Publication 2005/231349 A1 (BHAT) discloses an evacuation system, which provides enhanced operational control to an operator. In an embodiment, each voice point module capable of playing evacuation messages is implemented as an addressable unit, and an operator can cause different messages to be played on different voice point modules using a central station. Protocols such as H.323 may be supported on both voice point modules and the central station such that control data can be sent from the central station to the voice point modules. The control data can be used as a basis to provide features such as changing the volume level, storing messages locally in the voice point modules, or specifying specific stored message to be played.

PCT Application Publication WO 2006/034246 A2 (REYES ET AL) discloses a rapid alert initiation, management and archival system. The system comprises computer-enabled and network-linked apparatus, software, and methods enabling rapid dissemination from a central station or decentralized location of alerts of the occurrence of threatening or dangerous events. The system permits monitoring and controlling activity of occupants during the event, archiving event data, including audio, or/and video recordings until the situation returns to normal and an all clear signal is given. The system may include a wide range of sensor systems that are strategically placed throughout the site, complex or facility, including: network IP cameras; fire or smoke detectors; sonic detectors that can be selected for or tuned to unique event signatures; rapid pressure fluctuation sensors; thermal detectors (temperature); and the like.

### SUMMARY OF THE INVENTION

It is an object of the present invention to provide an internet protocol based audio alert system which stores alert messages on programmable devices located across a site under security management and broadcasts them in response to a very short and simple input, either instantaneously or in a time delayed and synchronized manner. In this specification and claims, the words "across a site", "across the site" and "site" are intended to include in their meaning "along a perimeter of a site and/or within a site".

According to the invention, there is provided an internet protocol based audio alert system for managing security across a site, comprising a network of a central server computer and one or more client computer communicating across the internet with a plurality of programmable edge devices and which control the operation of audiovisual input means and audiovisual output means located across the site, the programmable edge devices being programmed with software to enable them to store alert messages and send the alert messages to the audiovisual output means where the alert messages are broadcast in response to triggers received by the audiovisual input means, the audiovisual output means comprising a loudspeaker connected to each programmable edge device. The system further includes means for monitoring the ambient temperature at each loudspeaker and automatically adjusting the broadcast of the alert messages from one or more of the loudspeakers to compensate for the variation in the speed of sound at different temperatures and so as to synchronize the broadcast of the alert messages by each loudspeaker, and wherein the ambient temperature at each loudspeaker is received by the edge device which controls the operation of its loudspeaker, and the edge device applies the ambient temperature at its loudspeaker and the distance of the loudspeaker to a nominated central reference point, to an algorithm stored on the edge device which calculates a time delay that is used to automatically adjust the broadcast timing and synchronization of the alert messages. The system further includes means for monitoring the ambient noise at each loudspeaker and automatically adjusting the volume of the alert messages from one or more of the loudspeakers to compensate for the ambient noise. The means for monitoring the ambient temperature at each loudspeaker comprises a temperature sensor located on or adjacent to the loudspeaker.

The audiovisual output means may also include a visual information screen or a siren.

Preferably, the audiovisual input means is selected from the group consisting of a microphone, a motion sensor and a camera.

The alert messages are preferably audio or audiovisual alert messages which are uploaded onto the client computer and then distributed via the central server computer to the edge devices where the alert messages are stored and are ready to be sent to the audiovisual output means in response to triggers. It is preferred that the system includes means for assessing the positional relationship of the loudspeakers to a nominated central reference point and automatically synchronizing the broadcast of the alert messages by each loudspeaker, thereby avoiding or minimising any out of phase audio interference across the loudspeakers.

It is also preferred that the positional relationship of the loudspeakers is input on the client computer and is stored on the central server computer.

It is also preferred that the edge device notifies the central server computer of the ambient temperature at its loudspeaker. The central server computer applies the ambient temperature at the same loudspeaker to an algorithm stored on the central server computer which calculates a volume adjustment that is used to automatically adjust the broadcast volume of the alert messages.

The means for monitoring the ambient noise at each loudspeaker preferably comprises a dedicated microphone mounted on the loudspeaker.

It is preferred that the ambient noise at each loudspeaker is received by the edge device which controls the operation of the loudspeaker, and the edge device applies the ambient noise at the loudspeaker to an algorithm stored on the edge device which calculates a volume adjustment so as to automatically adjust the volume of the alert messages.

Preferably, the system includes means for self testing each loudspeaker, comprising a contact microphone located inside or close to each loudspeaker, and means for initiating and detecting a test audio transmission from each loudspeaker to assess an operational status of the loudspeaker. The operational status to be assessed is preferably either a working status or a not working status.

It is preferred that the test audio transmission is a dual tone multi-frequency (DTMF) signal which is stored by the edge device which controls the operation of the loudspeaker to be self tested.

Preferably, initiation of the signal from the loudspeaker starts with a self test instruction being sent from the client computer to the central server computer which then randomly selects the edge device, and the selected edge device generates and sends the signal to the loudspeaker for broadcast. The edge device, using the contact microphone, monitors feedback when the signal is broadcast. If a not working status of the loudspeaker is assessed, an alarm is generated and logged on the central server computer to facilitate remedial action.

It is preferred that the system includes means for providing live surveillance across the site, comprising a video camera fitted to or close to each loudspeaker, and means for streaming a live video feed from the video camera to the client computer where it can be viewed on a user interface screen of the client computer.

The video camera is preferably a closed circuit television (CCTV) camera which is internet enabled.

Preferably, before the live video feed can be streamed from the video camera, a live surveillance instruction is sent from the client computer to the central server computer which then opens communication between the video camera and the client computer. It is preferred that the means for streaming and viewing a live video feed from the video camera provides the live video feed simultaneously with the broadcast of the alert messages by the loudspeaker.

It is also preferred that the means for streaming and viewing a live video feed from the video camera provides the live video feed simultaneously with the receiving of a live audio feed from the dedicated microphone mounted on the loudspeaker.

In this way, the system streams both a live audio feed from the dedicated microphone and a live video feed from the closed circuit television camera back to the user interface screen of the client computer.

Preferably, the system includes means for streaming a live audio feed from the dedicated microphone to the loudspeaker on which it is mounted or to a group of loudspeakers in the network.

The live audio feed is preferably streamed from the dedicated microphone, via the edge device which controls the operation of the loudspeaker, to the central server computer where it is synchronized and then streamed back to the edge device for the loudspeaker, whereupon the edge device sends the live audio feed to the loudspeaker for broadcasting.

Preferably, the system includes means for streaming a live audio announcement across the site, comprising a microphone connected to the client computer and activated via a user interface thereof, and means for signaling to the central server computer that the live audio announcement is to be streamed and then streaming the live audio announcement to the central server computer which synchronizes the streaming and sends the live audio announcement to one or more of the edge devices, and then sending the live audio announcement to the or each respective loudspeaker where it is broadcast.

Preferably, the system includes means for recording an alert message for broadcast, comprising a microphone connected to the client computer and activated via a user interface thereof, and means for recording the alert message and then sending that alert message via the central server computer to the edge devices where it is stored. The alert message is preferably time stamped at the end of its recording.

The alert message, as well as being broadcast in response to triggers received by the audiovisual input means, may be broadcast upon instructions received directly from the central server computer or indirectly from the client computer via the central server computer.

Preferably, the system includes a programming interface for allowing a third party computer system to communicate with the central server computer. The third party computer system is preferably able to send alert messages and action notifications directly to the central server computer or indirectly to the central server computer via the client computer, whereupon the central server computer sends the alert messages to the edge devices for sending to the audiovisual output means, such as a loudspeaker, a visual information screen and a siren. The action notifications are used for prompting an action to be taken, either by the audiovisual output means or by the client computer.

The third party computer system is also preferably able to receive notifications from the central server computer that an action has been completed, such as the broadcasting by the loudspeakers of an alert message.

There has been thus outlined, rather broadly, the more important features of the invention in order that the detailed description thereof that follows may be better understood and put into practical effect, and in order that the present contribution to the art may be better appreciated.

There are additional features of the invention that will be described hereinafter. As such, those skilled in the art will appreciate that the conception, upon which the disclosure is based, may be readily utilized as the basis for designing other processes and systems for carrying out the objects of the present invention. It is important, therefore, that the broad outline of the invention described above be regarded as including such equivalent constructions in so far as they do not depart from the spirit and scope of the present invention.

### BRIEF DESCRIPTION OF THE DRAWINGS

The invention will be better understood and objects other than those set forth above will become apparent when consideration is given to the following detailed description thereof. Such description makes reference to the accompanying drawings, in which:
Figure 1 is a schematic diagram showing the components of an internet protocol based audio alert system according to a preferred embodiment of the invention,
Figure 2 is a schematic diagram showing in greater detail an edge configuration of the system shown in Figure 1 and which includes a loudspeaker assembly, an edge device and an Ethernet switch,
Figure 3 is a schematic diagram showing the positions of three loudspeakers that may be utilized in an internet protocol based audio alert system according to a preferred embodiment of the invention, the positions being shown relative to a nominated central reference point,
Figure 4 is a flow chart showing the steps of a preferred process of the system for assessing the positional relationship of the loudspeakers to the nominated central reference point and automatically synchronizing the broadcast of the alert messages by each loudspeaker,
Figure 5 is a flow chart showing the steps of a preferred process of the system for monitoring the ambient temperature at each loudspeaker and automatically adjusting the broadcast of the alert messages from one or more of the loudspeakers to compensate for the variation in the speed of sound at different temperatures,
Figure 6 is a flow chart showing the steps of a preferred process of the system for monitoring the ambient noise at each loudspeaker and automatically adjusting the volume of the alert messages from one or more of the loudspeakers,
Figure 7 is a flow chart showing the steps of a preferred process of the system for self testing each loudspeaker,
Figure 8 is a flow chart showing the steps of a preferred process of the system for providing live surveillance across the site, with the option of simultaneously broadcasting an alert message from one or more of the loudspeakers,
Figure 9 is a flow chart showing the steps of a preferred process of the system for providing live surveillance across the site, with the option of simultaneously receiving a live audio feed from a microphone on a loudspeaker,
Figure 10 is a flow chart showing the steps of a preferred process of the system for streaming a live audio feed from a microphone back to the loudspeaker on which it is mounted or to a group of loudspeakers,
Figure 11 is a flow chart showing the steps of a preferred process of the system for streaming a live audio announcement to a loudspeaker or to a group of loudspeakers,
Figure 12 is a flow chart showing the steps of a preferred process of the system for recording an alert message, storing it and then broadcasting the alert message, and
Figure 13 is a flow chart showing the steps of a preferred process of the system for allowing a third party computer system to communicate with the central server computer of the system.

### DETAILED DESCRIPTION OF THE PREFERRED EMBODIMENTS

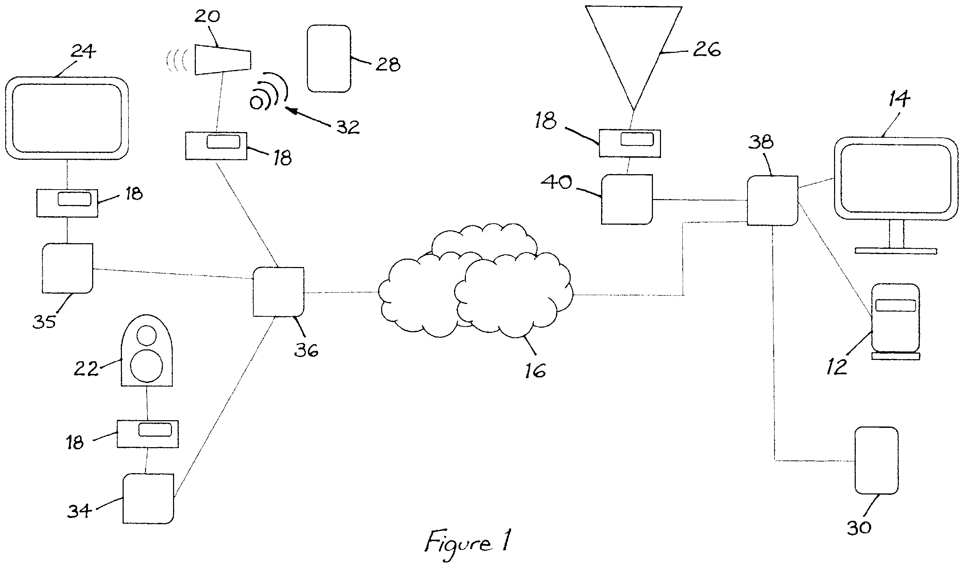

With reference to Figure 1, the internet protocol based audio alert system shown therein generally comprises a network of a central server computer 12, a central client computer 14 and a remote client computer 30 communicating across the internet (WAN) 16 with a plurality of programmable edge devices 18. The programmable edge devices 18 control the operation of audiovisual input means and audiovisual output means located across a site under security management by the system. The programmable edge devices 18 are programmed with software to enable them to store alert messages, which are preferably short alert messages, and send the alert messages to the audiovisual output means where the alert messages are broadcast in response to triggers received by the audiovisual input means. The audiovisual output means include a loudspeaker assembly 22 connected to each programmable edge device, but may also include a siren 20 or a visual information screen 24 at selected site locations. The audiovisual output means may also be an integrated emergency warning intercommunication system (EWIS) running off a private automatic branch exchange (PABX) 26. There is also the capability for the programmable edge devices 18 to send alert messages wirelessly, such as by Wi-Fi 32, to tablet computers 28, smart phones and other Wi-Fi activated devices. The central client computer 14 is, in this embodiment, a desktop computer, and the remote client computer 30 is, in this embodiment, a tablet computer, but the client computers may alternatively be a laptop computer or a smart phone. Although not shown in Figure 1, the audiovisual input means may be a microphone, a motion sensor or a camera.

Each of the four edge configurations shown in Figure 1 include not only their respective edge device 18 and specific audiovisual output means 22, 24, 26, 28, but also their respective Ethernet switch. The edge configurations which include the speaker assembly 22 and the visual information screen 24 utilize respective Ethernet switches 34, 35 which are both connected to an edge control room Ethernet switch 36. The edge control room Ethernet switch 36 is directly connected to the edge configuration which includes the siren 20 and Wi-Fi 32. The central control room configuration shown in Figure 1, which includes the central server computer 12, the central client computer 14 and the remote client computer 30, also includes a central control room Ethernet switch 38 which is connected to an Ethernet switch 40 for the edge configuration which includes the EWIS/PABX system 26.

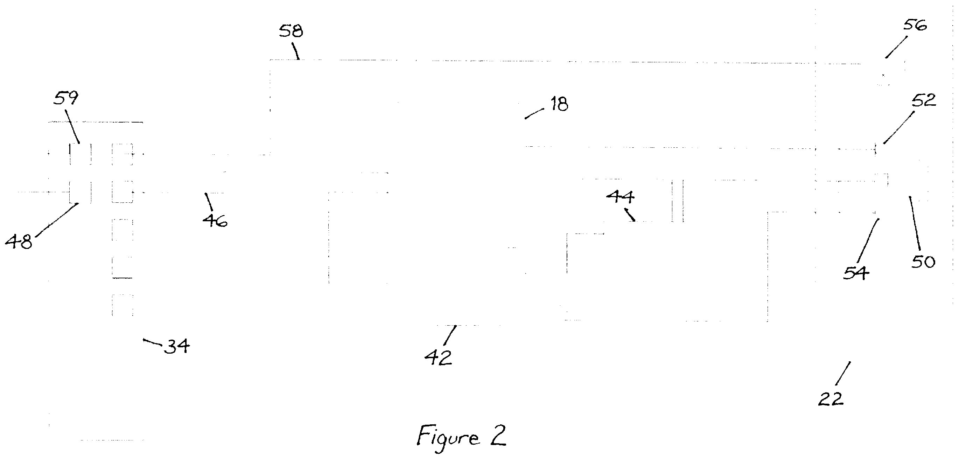

With reference to Figure 2, the edge configuration shown therein generally comprises a loudspeaker assembly 22, a programmable edge device 18 and an Ethernet switch 34. Also included in the edge configuration is an input/output interface 42 and an audio amplifier 44. The edge device 18 is ultimately connected to the central server computer 12 via internet components which include a LAN connection 46 to the Ethernet switch 34 and a small form-factor pluggable (SFP) transceiver which plugs into a SFP port 48 of the Ethernet switch 34. The programmable edge device 18, the Ethernet switch 34, the input/output interface 42 and an audio amplifier 44 are normally housed in a locked cabinet secured near the bottom of a pole on which the loudspeaker assembly 22 is mounted.

The edge device 18 is also connected to the loudspeaker assembly 22 in several different ways to accommodate various audiovisual input means and audiovisual output means mounted on the loudspeaker assembly 22.

For broadcast of an audio transmission, such as an alert message or a self test signal, from the loudspeaker 50 of the loudspeaker assembly 22, the edge device 18 is connected to the loudspeaker 50 via the audio amplifier 44.

The edge device 18 is also connected directly to a microphone 52, such as the dedicated microphone or the contact microphone, mounted on the loudspeaker assembly 22. The microphone 52 can be used for monitoring the ambient noise at the loudspeaker 50 for volume adjustment purposes, for receiving a live audio feed for live surveillance purposes or for streaming back to the loudspeaker 50 or to other loudspeakers, or for self testing the loudspeaker 50.

The edge device 18 is also connected to the input/output interface 42 which is ultimately connected to the loudspeaker assembly 22 in two ways. In one way, the input/output interface 42 is connected directly to a temperature sensor 54 mounted on the loudspeaker assembly 22. The temperature sensor 54 can be used for monitoring the ambient temperature at the loudspeaker 50 for message broadcast synchronization purposes. In another way, the input/output device 42 is connected to the loudspeaker 50 via the audio amplifier 44.

The edge device 18 is not connected to a CCTV camera 56 mounted on the loudspeaker assembly 22. Instead, the CCTV camera 56, when streaming a live video feed, is connected to a client computer 14, 30 for viewing the live video feed on the user interface screen of the client computer. The live video feed from the camera 56 is streamed to the client computer 14, 30 via internet components which include a LAN connection 58 to the Ethernet switch 34 and a SFP transceiver which plugs into a SFP port of the Ethernet switch 34. Before a live video feed can be streamed, the client computer 14, 30 needs to complete a "hand shake" (also referred to later as a live surveillance instruction) with the central server computer 12 by which the connection between the client computer 14, 30 and the camera 56 is initiated and authenticated. More will be said about a means for providing live surveillance across the site, which surveillance utilizes the video camera 56, later in the specification.

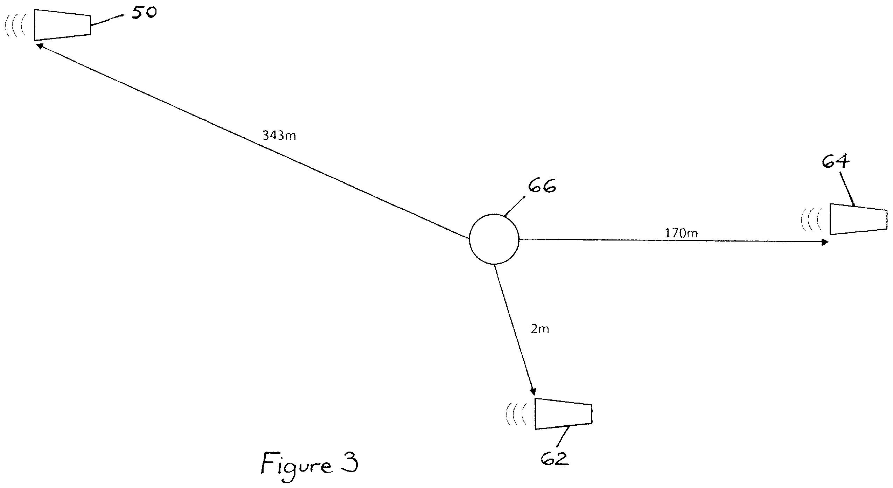

With reference to Figure 3, the positions of three loudspeakers 50, 62, 64 of a preferred internet protocol based audio alert system of this invention are shown relative to a nominated central reference point 66. The distance from the central reference point 66 to loudspeaker 50 is 343 metres, to loudspeaker 62 is 2 metres, and to loudspeaker 64 is 170 metres.

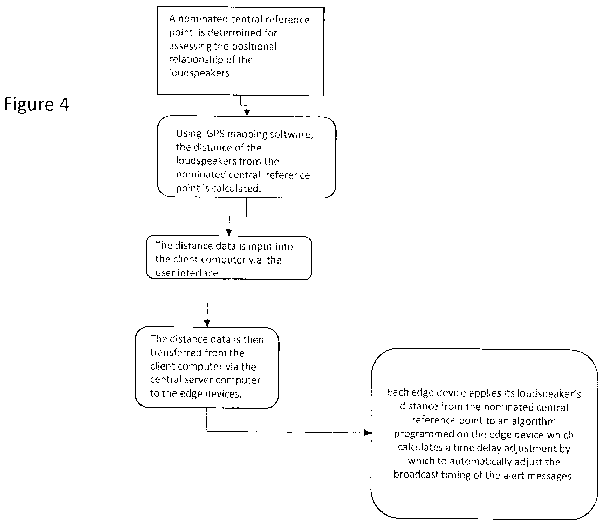

The system includes means for assessing the positional relationship of the loudspeakers 50, 62, 64 to the nominated central reference point 66 and automatically synchronizing the broadcast of the alert messages by each loudspeaker, thereby avoiding or minimising any out of phase audio interference across the loudspeakers. In this embodiment, the positional relationship of the loudspeakers is input on the client computer 14, 30 and is stored on the central server computer 12. Figure 4 is a flow chart schematically showing the steps in the aforementioned process.

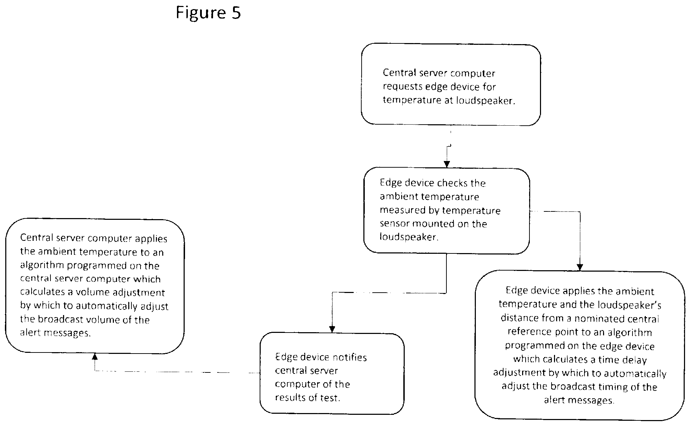

The system includes means for monitoring the ambient temperature at each loudspeaker 50, 62, 64 and automatically adjusting the broadcast of the alert messages from one or more of the loudspeakers to compensate for the variation in the speed of sound at different temperatures and so as to synchronize the broadcast of the alert messages by each loudspeaker. In this embodiment, the means for monitoring the ambient temperature at each loudspeaker is a temperature sensor 54 mounted on each loudspeaker. The ambient temperature at each loudspeaker 50, 62, 64 is received by the respective edge device 18 which controls the operation of its loudspeaker, and the edge device notifies the central server computer 12 of the ambient temperature. Each edge device 18 applies the ambient temperature at its loudspeaker and the distance of the loudspeaker to the nominated central reference point 66, to an algorithm stored on the edge device 18 which calculates a time delay that is used to automatically adjust the broadcast timing and synchronization of the alert messages. The central server computer 12 applies the ambient temperature at the same loudspeaker to an algorithm (which provides a matrix of temperature versus resistance) stored on the central server computer 12 which calculates a volume adjustment that is used to automatically adjust the broadcast volume of the alert messages. As a result, the broadcast timing and the broadcast volume of the alert messages from each of the loudspeakers is such as to provide a synchronized and intelligible alert message across the site. Figure 5 is a flow chart schematically showing the steps in the aforementioned process.

The following description illustrates in even greater detail how the system can assess the positional relationship of the loudspeakers 50, 62, 64 to the nominated central reference point 66 and use the ambient temperature at each loudspeaker to calculate a time delay and to calculate a volume adjustment so as to automatically adjust the broadcast volume of the alert messages and synchronize the broadcast timing of the alert messages by each loudspeaker. Note that as air temperature increases, the speed of sound (normally 343.2 m/sec in dry air at 20°C) also increases, and so any pre-set time delay determined for average temperature will have to be decreased for a higher temperature or increased for a lower temperature.

An operator of a client computer 14, 30 uses the user interface thereof to select a desired alert message to be broadcast in a specified zone (defined by selected loudspeakers 50, 62, 64) of the site and at a specified time. The client computer 14, 30 sends the alert message and an instruction on where and when the alert message is to be broadcast to the central server computer 12 via the IP network. The central server computer 12 receives the alert message and the instruction and calculates a suitable initial time delay to add to the specified time for the purpose of allowing the alert message and the instruction to reach the edge devices which control the operation of the loudspeakers 50, 62, 64 in sufficient time for each of them to respond in a correct sequence. The central server computer 12 sends the alert message and the instruction across the IP network to all the edge devices, but only those edge devices which control the operation of the loudspeakers 50, 62, 64 react to the alert message and the instructions. Each of those edge devices react by queuing the alert message for broadcast and then adding a suitable further time delay to the initial time delay added to the specified time by the central server computer 12. The further time delay added by each edge device is calculated by an algorithm stored on the edge device which uses the preprogrammed distance of the edge device from the central reference point 66 and uses the ambient temperature at the loudspeaker controlled by the edge device to calculate the further time delay. The addition of these time delays ensures that the broadcast of the alert message from each loudspeaker 50, 62, 64 is synchronized and intelligible. In the positional relationship of the loudspeakers 50, 62, 64 to the nominated central reference point 66 shown in Figure 3, the time delay to broadcast the alert message from loudspeaker 50 is the specified time plus 1 second, from the loudspeaker 62 is the specified time plus 0 seconds, and from the loudspeaker 64 is the specified time plus 0.5 second.

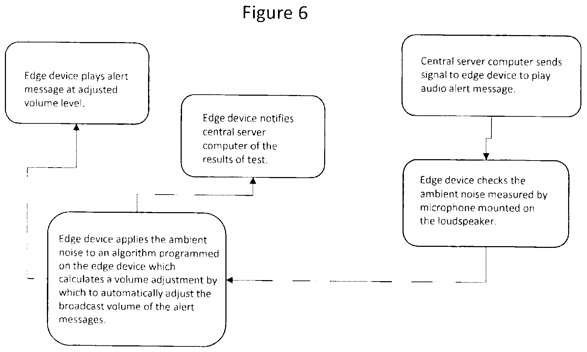

The system includes means for monitoring the ambient noise at each loudspeaker 50, 62, 64 and automatically adjusting the volume of the alert messages from one or more of the loudspeakers to compensate for the ambient noise. In this embodiment, the means for monitoring the ambient noise at each loudspeaker is a dedicated microphone 52 mounted on each loudspeaker. The ambient noise at each loudspeaker 50, 62, 64 is received by the respective edge device 18 which controls the operation of the loudspeaker, and the edge device applies the ambient noise at the loudspeaker to an algorithm stored on the edge device 18 which calculates a volume adjustment so as to automatically adjust the volume of the alert messages. Figure 6 is a flow chart schematically showing the steps in the aforementioned process.

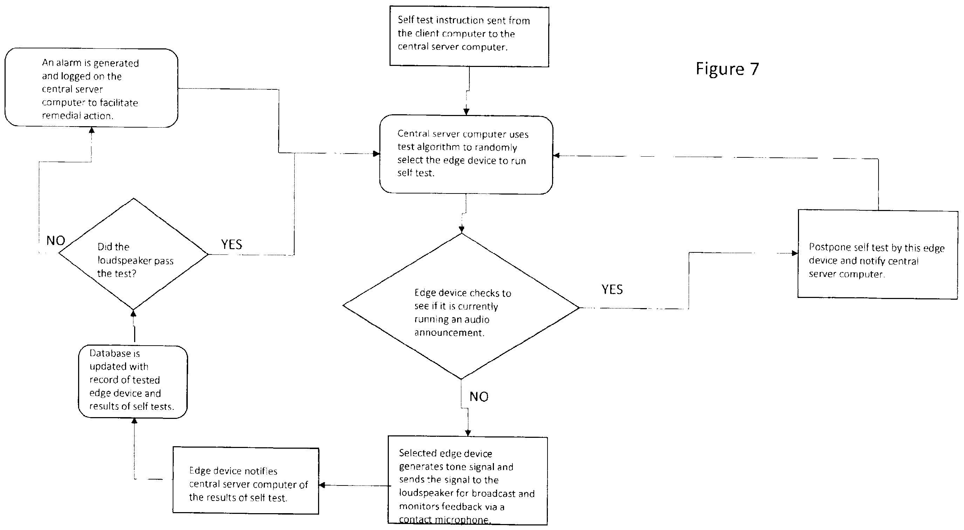

The system includes means for self testing each loudspeaker 50, 62, 64 comprising a contact microphone 52 located inside or close to each loudspeaker, and means for initiating and detecting a test audio transmission from each loudspeaker to assess an operational status of the loudspeaker. The operational status to be assessed is either a working status (YES) or a not working status (NO). In this embodiment, the test audio transmission is a dual tone multi-frequency (DTMF) signal which is stored by the edge device 18 which controls the operation of the loudspeaker 50 to be self tested. Initiation of the signal from the loudspeaker 50 starts with a self test instruction being sent from the client computer 14, 30 to the central server computer 12 which then randomly selects an edge device, and the selected edge device 18 generates and sends the signal to the loudspeaker 50 for broadcast. The edge device 18, via the contact microphone 52, monitors feedback (eg. volume level) when the signal is broadcast. If a not working status of the loudspeaker 50 is assessed, an alarm is generated and logged on the central server computer 12 to facilitate remedial action. Figure 7 is a flow chart schematically showing the steps in the aforementioned process.

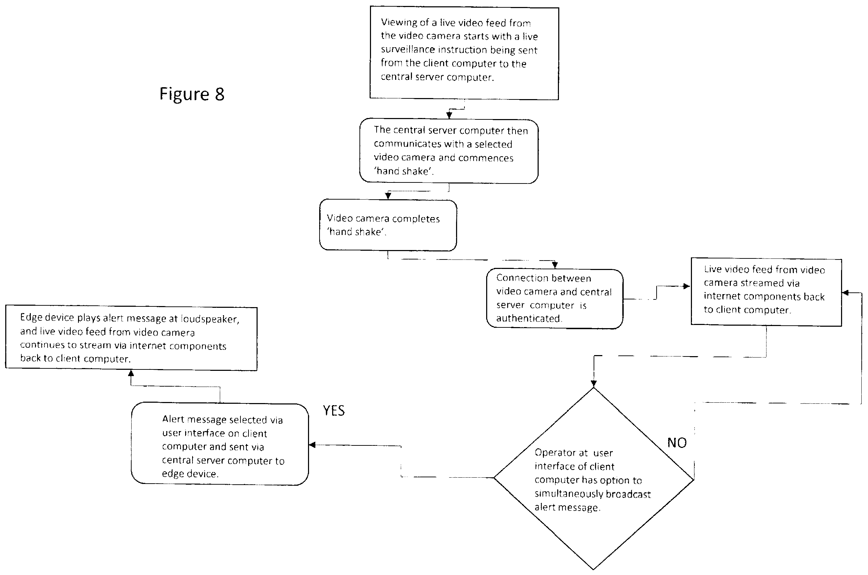

The system includes means for providing live surveillance across the site, comprising a video camera 56 fitted to or close to each loudspeaker 50, 62, 64, and means for streaming a live video feed from the video camera 56 to the client computer 14, 30 where it can be viewed on a user interface screen of the client computer. In this embodiment, the video camera 56 is a closed circuit television camera (CCTV) which is internet enabled. Before the live video feed can be streamed from the video camera 56, a live surveillance instruction is sent from the client computer 14, 30 to the central server computer 12 which then opens communication between the video camera 56 and the client computer. If required, the means for streaming and viewing a live video feed from the video camera 56 provides the live video feed simultaneously with the broadcast of the alert messages by the loudspeaker 50. Figure 8 is a flow chart schematically showing the steps in the aforementioned process.

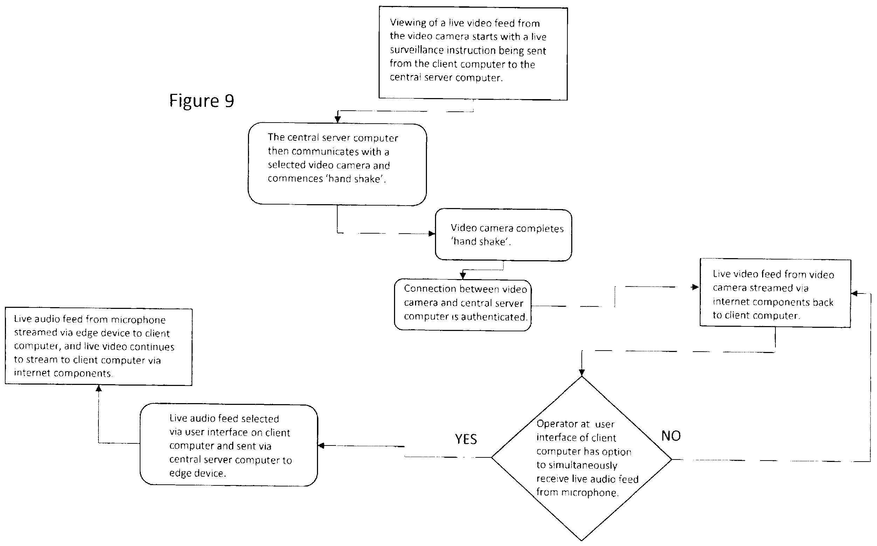

Also, if required, the aforementioned means for streaming and viewing a live video feed from the video camera 56 provides the live video feed simultaneously with the receiving of a live audio feed from the dedicated microphone 52 mounted on the loudspeaker 50. Figure 9 is a flow chart schematically showing the steps in the aforementioned process.

In this way, the system streams both a live audio feed from the dedicated microphone 52 and a live video feed from the closed circuit television camera 56 back to the user interface screen of the client computer 14, 30. Such live visual and audio monitoring allows the subsequent alert messages to be tailored or specifically responsive to the events unfolding on the user interface screen and speaker of the client computer 14, 30.

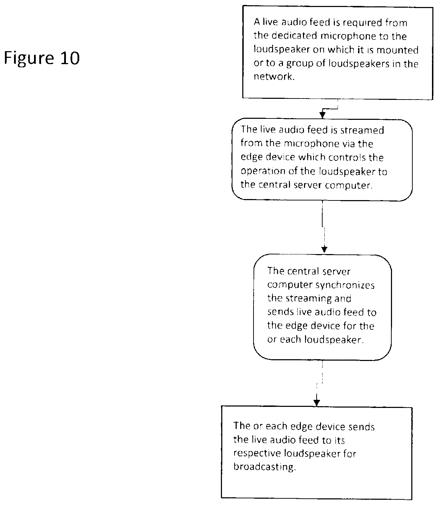

The system includes means for streaming a live audio feed from the dedicated microphone 52 to the loudspeaker 50 on which it is mounted or to a group of loudspeakers in the network. In this embodiment, the live audio feed is streamed from the dedicated microphone 52, via the edge device 18 which controls the operation of the loudspeaker 50, to the central server computer 12 where it is synchronized and then streamed back to the edge device 18 for the loudspeaker. The edge device sends the live audio feed to the loudspeaker where it is broadcast. Figure 10 is a flow chart schematically showing the steps in the aforementioned process.

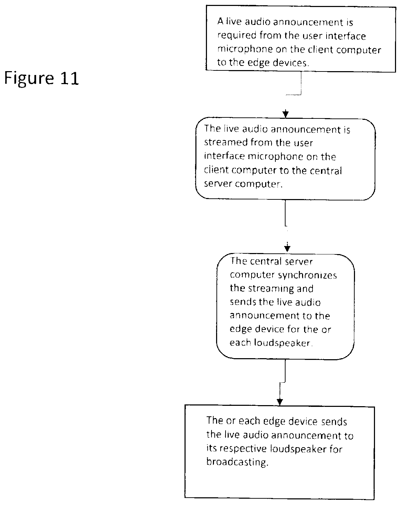

The system includes means for streaming a live audio announcement to one or more loudspeakers across the site, comprising a microphone 52 connected to the client computer 14, 30 and activated via a user interface thereof, and means for signaling to the central server computer 12 that the live audio announcement is to be streamed and then streaming the live audio announcement to the central server computer 12. The central server computer 12 synchronizes the streaming and sends the live audio announcement to one or more of the edge devices 18, and the live audio announcement is then sent to the or each respective loudspeaker 50, 62, 64 where it is broadcast. Figure 11 is a flow chart schematically showing the steps in the aforementioned process.

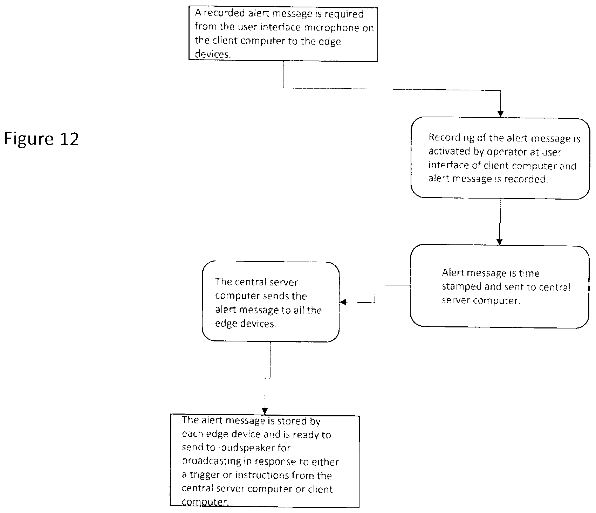

The system includes means for recording an alert message for broadcast, comprising a microphone 52 connected to the client computer 14, 30 and activated via a user interface thereof, and means for recording the alert message and then sending that alert message via the central server computer 12 to the edge devices 18 where it is stored. In this embodiment, the alert message is time stamped at the end of its recording. The alert message, as well as being broadcast in response to triggers received by the audiovisual input means, such as the microphone 52, a motion sensor or a camera, may be broadcast upon instructions received directly from the central server computer 12 or indirectly from the client computer 14, 30 via the central server computer 12. Figure 12 is a flow chart schematically showing the steps in the aforementioned process.

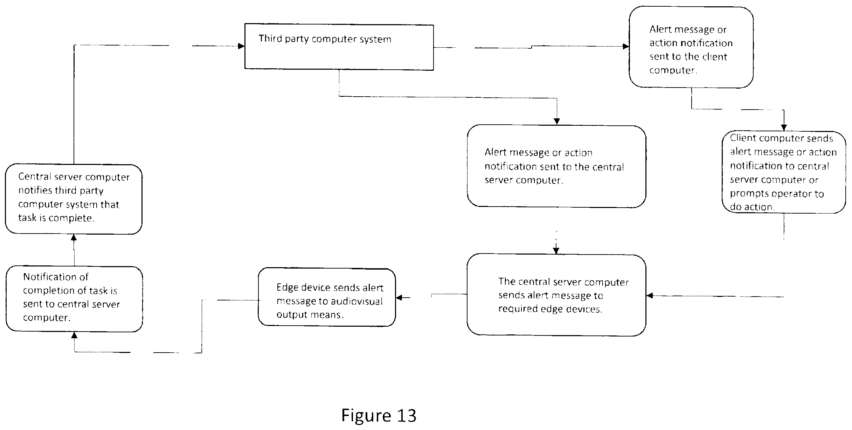

The system includes a programming interface for allowing a third party computer system to communicate with the central server computer 12. In this embodiment, the third party computer system is able to send alert messages and action notifications directly to the central server computer 12 or indirectly to the central server computer via the client computer 14, 30, whereupon the central server computer sends the alert message to the edge devices for sending to the loudspeakers and/or other audiovisual output means. The action notifications are used for prompting an action to be taken, either by the audiovisual output means or by the client computer. The third party computer system is also able to receive notifications from the central server computer 12 that an action has been completed, such as the loudspeakers broadcasting, via the edge devices 18, an alert message. Figure 13 is a flow chart schematically showing the steps in the aforementioned process.

The system of the present invention requires less bandwidth than those internet protocol based audio alert systems which store long alert messages centrally and transmit them across a network for broadcasting. The shorter alert messages which are transmitted in the system of the present invention (because they take the electronic form of smaller data packets) minimize the risk of degradation and errors in the transmissions, are less vulnerable to attack by security threats, and increase the capacity to synchronize the broadcast of the messages, making the system more reliable than known server driven systems where alert messages are stored and transmitted from a central server computer.

The system of the present invention is multifunctional, as it can send audio and audiovisual alert messages, and can respond in these ways to different trigger inputs, such as intruder detection and temperature increase, without the involvement of a central server computer.

Synchronous broadcast of each alert message from the loudspeakers is an important feature of the present invention. The location of all the loudspeakers in the network is known by a global positioning system (GPS) and the temperature at each loudspeaker is also monitored. With this information, the timing and volume of the broadcast of the alert message from each speaker can be adjusted based on the speed of sound at the relevant temperature, thereby ensuring that the alert messages are synchronized to maximize broadcast deliverability and intelligibility, and to minimize alert message interference.

Live surveillance using a video camera fitted to a loudspeaker simultaneously with an audio transmission from the loudspeaker is another important feature of the present invention. This is achieved using known video transmission software which cooperates with an audio data stream over the same internet protocol network.

Another important feature of the present invention is that its client-server computer architecture is built on the Microsoft Windows™. NET operating system which confers reliability and seamless integration with many existing networks and infrastructure.

It will be readily apparent to persons skilled in the art that various modifications may be made in details of design and construction of the embodiments of the internet protocol based audio alert system, and in the steps of using the system described above, without departing from the scope or ambit of the present invention.

## Claims

1. An internet protocol based audio alert system for managing security across a site, comprising a network of a central server computer (12) and one or more client computer (14, 30) communicating across the internet (16) with a plurality of programmable edge devices (18) and which control the operation of audiovisual input means and audiovisual output means (20, 22, 24, 26) located across the site, the programmable edge devices (18) being programmed with software to enable them to store alert messages and send the alert messages to the audiovisual output means (20, 22, 24, 26) where the alert messages are broadcast in response to triggers received by the audiovisual input means, the audiovisual output means (20, 22, 24, 26) comprising a loudspeaker (50, 62, 64) connected to each programmable edge device (18), **characterised in that**
the system further includes means for monitoring the ambient temperature at each loudspeaker (50, 62, 64) and automatically adjusting the broadcast of the alert messages from one or more of the loudspeakers to compensate for the variation in the speed of sound at different temperatures and so as to synchronize the broadcast of the alert messages by each loudspeaker (50, 62, 64), and wherein the ambient temperature at each loudspeaker (50, 62, 64) is received by the edge device (18) which controls the operation of its loudspeaker (50, 62, 64), and the edge device (18) applies the ambient temperature at its loudspeaker (50, 62, 64) and the distance of the loudspeaker (50, 62, 64) to a nominated central reference point (66), to an algorithm stored on the edge device (18) which calculates a time delay that is used to automatically adjust the broadcast timing and synchronization of the alert messages;
the system further includes means for monitoring the ambient noise at each loudspeaker (50, 62, 64) and automatically adjusting the volume of the alert messages from one or more of the loudspeakers (50, 62, 64) to compensate for the ambient noise; and
the means for monitoring the ambient temperature at each loudspeaker (50, 62, 64) comprises a temperature sensor (54) located on or adjacent to the loudspeaker (50, 62, 64).

2. The system of claim 1 wherein the audiovisual output means (20, 22, 24, 26) also includes a visual information screen or a siren, and the audiovisual input means is selected from the group consisting of a microphone (52), a motion sensor and a camera (56).

3. The system of claim 1 wherein the alert messages are audio or audiovisual alert messages which are uploaded onto the client computer (14, 30) and then distributed via the central server computer (12) to the edge devices (18) where the alert messages are stored and are ready to be sent to the audiovisual output means (20, 22, 24, 26) in response to triggers.

4. The system of claim 1 and further including means for assessing a positional relationship of the loudspeakers (50, 62, 64) to the nominated central reference point (66) and automatically synchronizing the broadcast of the alert messages by each loudspeaker (50, 62, 64), thereby avoiding or minimising any out of phase audio interference across the loudspeakers (50, 62, 64).

5. The system of claim 3 wherein the positional relationship of the loudspeakers (50, 62, 64) is input on the client computer (14, 30) and is stored on the central server computer (12).

6. The system of claim 1 wherein the edge device (18) notifies the central server computer (12) of the ambient temperature at its loudspeaker (50, 62, 64), and the central server computer (12) applies the ambient temperature at the same loudspeaker (50, 62, 64) to an algorithm stored on the central server computer (12) which calculates a volume adjustment that is used to automatically adjust the broadcast volume of the alert messages.

7. The system of claim 1 wherein the means for monitoring the ambient noise at each loudspeaker (50, 62, 64) comprises a dedicated microphone (52) located on or adjacent to the loudspeaker (50, 62, 64).

8. The system of claim 1 wherein the ambient noise at each loudspeaker (50, 62, 64) is received by the edge device (18) which controls the operation of the loudspeaker (50, 62, 64), and the edge device (18) applies the ambient noise at the loudspeaker (50, 62, 64) to an algorithm stored on the edge device (18) which calculates a volume adjustment so as to automatically adjust the volume of the alert messages.

9. The system of claim 1 and further including means for self testing each loudspeaker (50, 62, 64), the means for self testing comprising a contact microphone (52) located inside or adjacent to each loudspeaker (50, 62, 64), and means for initiating and detecting a test audio transmission from each loudspeaker (50, 62, 64) to assess an operational status of the loudspeaker (50, 62, 64).

10. The system of claim 9 wherein the test audio transmission is a dual tone multifrequency (DTMF) signal which is stored by the edge device (18) which controls the operation of the loudspeaker (50, 62, 64) to be self tested.

11. The system of claim 10 wherein initiation of the signal from the loudspeaker (50, 62, 64) starts with a self test instruction being sent from the client computer (14, 30) to the central server computer (12) which then randomly selects the edge device (18), and the selected edge device (18) generates and sends the signal to the loudspeaker (50, 62, 64) for broadcast, and wherein upon the signal being broadcast, the edge device (18), using the contact microphone (52), monitors feedback of the signal, such that if a not working status of the loudspeaker (50, 62, 64) is assessed, an alarm is generated and logged on the central server computer (12) to facilitate a remedial action.

12. The system of claim 1 and further including means for providing live surveillance across the site, the means for providing live surveillance comprising a video camera (56) fitted to or adjacent to each loudspeaker (50, 62, 64), and means for streaming a live video feed from the video camera (56) to the client computer (14, 30) where it can be viewed on a user interface screen of the client computer (14, 30), wherein the video camera (56) is a closed circuit television (CCTV) camera which is internet enabled, and the means for streaming a live video feed from the video camera (56) provides the live video feed simultaneously with the broadcast of the alert messages by the loudspeaker (50, 62, 64), and wherein the means for streaming a live video feed from the video camera (56) provides the live video feed simultaneously with the receiving of a live audio feed from the dedicated microphone (52) located on or adjacent to the loudspeaker (50, 62, 64).

13. The system of claim 1 and further including means for streaming a live audio announcement across the site, comprising a microphone (52) connected to the client computer (14, 30) and activated via a user interface thereof, and means for signaling to the central server computer (12) that the live audio announcement is to be streamed and then streaming the live audio announcement to the central server computer (12) which synchronizes the streaming and sends the live audio announcement to one or more of the edge devices (18), and then sending the live audio announcement to the or each respective loudspeaker (50, 62, 64) where it is broadcast.

14. The system of claim 1 and further including a programming interface for allowing a third party computer system to communicate with the central server computer (12), whereby the third party computer system is able to send alert messages and action notifications directly to the central server computer (12) or indirectly to the central server computer (12) via the client computer, whereupon the central server computer (12) sends the alert messages to the edge devices (18) for broadcasting to the loudspeakers (50, 62, 64), and whereby the third party computer system is also able to receive notifications from the central server computer (12) that the alert messages have been broadcast.

## Patentansprüche

1. Internetprotokollbasiertes Audiowarnsystem zur Verwaltung der Sicherheit innerhalb eines Standortes, umfassend ein Netzwerk aus einem zentralen Servercomputer (12) und einem oder mehreren Client-Computern (14, 30), die über das Internet (16) mit einer Mehrzahl von programmierbaren Peripheriegeräten (18) kommunizieren und die den Betrieb von innerhalb des Standortes befindlichen audiovisuellen Eingabemitteln und audiovisuellen Ausgabemitteln (20, 22, 24, 26) steuern, wobei die programmierbaren Peripheriegeräte (18) mit Software programmiert sind, damit sie Warnmeldungen speichern und die Warnmeldungen an die audiovisuellen Ausgabemittel (20, 22, 24, 26) senden können, wo die Warnmeldungen als Reaktion auf von den audiovisuellen Eingabemitteln empfangene Auslöser ausgesendet werden, wobei die audiovisuellen Ausgabemittel (20, 22, 24, 26) einen Lautsprecher (50, 62, 64) umfassen, der mit jedem programmierbaren Peripheriegerät (18) verbunden ist, **dadurch gekennzeichnet, dass**
das System ferner Mittel zum Überwachen der Umgebungstemperatur an jedem Lautsprecher (50, 62, 64) und automatischen Einstellen der Aussendung der Warnmeldungen aus einem oder mehreren der Lautsprecher, um die Variation der Schallgeschwindigkeit bei verschiedenen Temperaturen auszugleichen und um die Aussendung der Warnmeldungen durch jeden Lautsprecher (50, 62, 64) zu synchronisieren, beinhaltet, und worin die Umgebungstemperatur an jedem Lautsprecher (50, 62, 64) von dem Peripheriegerät (18) empfangen wird, das den Betrieb seines Lautsprechers (50, 62, 64) steuert, und das Peripheriegerät (18) die Umgebungstemperatur an seinem Lautsprecher (50, 62, 64) und den Abstand des Lautsprechers (50, 62, 64) zu einem nominierten zentralen Bezugspunkt (66) auf einen auf dem Peripheriegerät (18) gespeicherten Algorithmus anwendet, der eine Zeitverzögerung berechnet, die zum automatischen Einstellen der Zeitabstimmung und Synchronisation, bei Aussendung, der Warnmeldungen verwendet wird;
das System ferner Mittel zum Überwachen des Umgebungsgeräusches an jedem Lautsprecher (50, 62, 64) und automatischen Einstellen der Lautstärke der Warnmeldungen aus einem oder mehreren der Lautsprecher (50, 62, 64) zum Ausgleichen des Umgebungsgeräusches beinhaltet; und
das Mittel zum Überwachen der Umgebungstemperatur an jedem Lautsprecher (50, 62, 64) einen Temperatursensor (54) umfasst, der sich an oder neben dem Lautsprecher (50, 62, 64) befindet.

2. System nach Anspruch 1, worin das audiovisuelle Ausgabemittel (20, 22, 24, 26) auch einen visuellen Informationsbildschirm oder eine Sirene beinhaltet und das audiovisuelle Eingabemittel aus der aus einem Mikrofon (52), einem Bewegungssensor und einer Kamera (56) bestehenden Gruppe ausgewählt ist.

3. System nach Anspruch 1, worin die Warnmeldungen Audio- oder audiovisuelle Warnmeldungen sind, die auf den Client-Computer (14, 30) hochgeladen und dann über den zentralen Servercomputer (12) auf die Peripheriegeräte (18) verteilt werden, wo die Warnmeldungen gespeichert sind und zum Senden an das audiovisuelle Ausgabemittel (20, 22, 24, 26) als Reaktion auf Auslöser bereit sind.

4. System nach Anspruch 1 und ferner beinhaltend Mittel zum Bewerten einer positionellen Beziehung der Lautsprecher (50, 62, 64) zu dem nominierten zentralen Bezugspunkt (66) und automatischen Synchronisieren der Aussendung der Warnmeldungen durch jeden Lautsprecher (50, 62, 64), wodurch jegliche phasenverschobene Interferenz an den Lautsprechern (50, 62, 64) vermieden oder minimiert wird.

5. System nach Anspruch 3, worin die positionelle Beziehung der Lautsprecher (50, 62, 64) auf dem Client-Computer (14, 30) eingegeben wird und auf dem zentralen Servercomputer (12) gespeichert ist.

6. System nach Anspruch 1, worin das Peripheriegerät (18) den zentralen Servercomputer (12) über die Umgebungstemperatur an seinem Lautsprecher (50, 62, 64) benachrichtigt und der zentrale Servercomputer (12) die Umgebungstemperatur an demselben Lautsprecher (50, 62, 64) auf einen Algorithmus anwendet, der auf dem zentralen Servercomputer (12) gespeichert ist, der eine Lautstärkeeinstellung berechnet, die zum automatischen Einstellen der Aussendungslautstärke der Warnmeldungen verwendet wird.

7. System nach Anspruch 1, worin das Mittel zum Überwachen des Umgebungsgeräusches an jedem Lautsprecher (50, 62, 64) ein dediziertes Mikrofon (52) umfasst, das sich an oder neben dem Lautsprecher (50, 62, 64) befindet.

8. System nach Anspruch 1, worin das Umgebungsgeräusch an jedem Lautsprecher (50, 62, 64) von dem Peripheriegerät (18) empfangen wird, das den Betrieb des Lautsprechers (50, 62, 64) steuert, und das Peripheriegerät (18) das Umgebungsgeräusch an dem Lautsprecher (50, 62, 64) auf einen auf dem Peripheriegerät (18) gespeicherten Algorithmus anwendet, der eine Lautstärkeeinstellung berechnet, um so die Lautstärke der Warnmeldungen automatisch einzustellen.

9. System nach Anspruch 1 und ferner beinhaltend Mittel zum Selbsttesten jedes Lautsprechers (50, 62, 64), wobei das Mittel zum Selbsttesten ein Kontaktmikrofon (52), das sich in oder neben jedem Lautsprecher (50, 62, 64) befindet, und Mittel zum Initiieren und Feststellen einer Audio-Testübertragung aus jedem Lautsprecher (50, 62, 64), um einen Betriebsstatus des Lautsprechers (50, 62, 64) zu bewerten, umfasst.

10. System nach Anspruch 9, worin die Audio-Testübertragung ein Doppelton-Mehrfrequenz(DTMF)-Signal ist, das von dem Peripheriegerät (18) gespeichert wird, das den Betrieb des selbstzutestenden Lautsprechers (50, 62, 64) steuert.

11. System nach Anspruch 10, worin Initiierung des Signals aus dem Lautsprecher (50, 62, 64) mit einer Selbsttest-Anweisung beginnt, die von dem Client-Computer (14, 30) an den zentralen Servercomputer (12) gesendet wird, der dann das Peripheriegerät (18) zufällig auswählt, und das ausgewählte Peripheriegerät (18) das Signal erzeugt und an den Lautsprecher (50, 62, 64) zur Aussendung sendet und worin, nach Aussendung des Signals, das Peripheriegerät (18) mithilfe des Kontaktmikrofons (52) Feedback des Signals überwacht, sodass, wenn ein Nichtfunktionsstatus des Lautsprechers (50, 62, 64) bewertet wird, ein Alarm erzeugt und auf dem zentralen Servercomputer (12) protokolliert wird, um eine Abhilfemaßnahme zu ermöglichen.

12. System nach Anspruch 1 und ferner beinhaltend Mittel zum Bereitstellen einer Live-Überwachung innerhalb des Standortes, wobei das eine Live-Überwachung bereitstellende Mittel eine an oder neben jedem Lautsprecher (50, 62, 64) montierte Videokamera (56) und Mittel zum Streamen einer Live-Videoeinspielung von der Videokamera (56) zu dem Client-Computer (14, 30), wo sie auf einem Benutzeroberflächenbildschirm des Client-Computers (14, 30) betrachtet werden kann, umfasst, worin die Videokamera (56) eine Videoüberwachungs(CCTV)-Kamera ist, die internetfähig ist, und das Mittel zum Streamen einer Live-Videoeinspielung von der Videokamera (56) die Live-Videoeinspielung zeitgleich mit der Aussendung der Warnmeldungen durch den Lautsprecher (50, 62, 64) bereitstellt und worin das Mittel zum Streamen einer Live-Videoeinspielung von der Videokamera (56) die Live-Videoeinspielung zeitgleich mit dem Empfang einer Live-Audioeinspielung von dem dedizierten, an oder neben dem Lautsprecher (50, 62, 64) befindlichen Mikrofon (52) bereitstellt.

13. System nach Anspruch 1 und ferner beinhaltend Mittel zum Streamen einer Live-Audiodurchsage innerhalb des Standortes, umfassend ein Mikrofon (52), das mit dem Client-Computer (14, 30) verbunden ist und über eine Benutzeroberfläche davon aktiviert wird, und Mittel zum Signalisieren an den zentralen Servercomputer (12), dass die Audio-Livedurchsage zu streamen ist, und anschließendes Streamen der Audio-Livedurchsage an den zentralen Servercomputer (12), der das Streamen synchronisiert und die Audio-Livedurchsage an eines oder mehrere der Peripheriegeräte (18) sendet, und anschließendes Senden der Audio-Livedurchsage an den oder jeden jeweiligen Lautsprecher (50, 62, 64), wo sie ausgesendet wird.

14. System nach Anspruch 1 und ferner beinhaltend eine Programmierschnittstelle, die einem fremden Computersystem erlaubt, mit dem zentralen Servercomputer (12) zu kommunizieren, wodurch das fremde Computersystem Warnmeldungen und Aktionsbenachrichtigungen direkt an den zentralen Servercomputer (12) oder indirekt an den zentralen Servercomputer (12) über den Client-Computer senden kann, woraufhin der zentrale Servercomputer (12) die Warnmeldungen an die Peripheriegeräte (18) zur Aussendung an die Lautsprecher (50, 62, 64) sendet und wodurch das fremde Computersystem außerdem fähig ist, Benachrichtigungen von dem zentralen Servercomputer (12), dass die Warnmeldungen ausgesendet worden sind, empfangen kann.

## Revendications

1. Système d'alerte audio basé sur un protocole internet permettant de gérer la sécurité sur un site, comprenant un réseau d'un ordinateur serveur central (12) et d'un ou plusieurs ordinateurs client (14, 30) communiquant, par internet (16), avec une pluralité de dispositifs périphériques programmables (18) et qui commandent le fonctionnement d'un moyen d'entrée audiovisuel et d'un moyen de sortie audiovisuel (20, 22, 24, 26) situés sur le site, les dispositifs périphériques programmables (18) étant programmés avec un logiciel pour leur permettre de stocker des messages d'alerte et d'envoyer les messages d'alerte au moyen de sortie audiovisuel (20, 22, 24, 26) où les messages d'alerte sont diffusés en réponse à des déclencheurs reçus par le moyen d'entrée audiovisuel, le moyen de sortie audiovisuel (20, 22, 24, 26) comprenant un haut-parleur (50, 62, 64) connecté à chaque dispositif périphérique programmable (18), **caractérisé en ce que**
le système inclut en outre un moyen de surveillance de la température ambiante à chaque haut-parleur (50, 62, 64) et d'ajustement automatique de la diffusion des messages d'alerte provenant d'un ou de plusieurs haut-parleurs pour compenser la variation de la vitesse du son à différentes températures et de façon à synchroniser la diffusion des messages d'alerte par chaque haut-parleur (50, 62, 64), et dans lequel la température ambiante à chaque haut-parleur (50, 62, 64) est reçue par le dispositif périphérique (18) qui commande le fonctionnement de son haut-parleur (50, 62, 64), et le dispositif périphérique (18) applique la température ambiante à son haut-parleur (50, 62, 64) et la distance du haut-parleur (50, 62, 64) à un point de référence central désigné (66), à un algorithme stocké sur le dispositif périphérique (18) qui calcule une temporisation qui est utilisée pour ajuster automatiquement la temporisation et la synchronisation de diffusion des messages d'alerte ;
le système inclut en outre un moyen de surveillance du bruit ambiant à chaque haut-parleur (50, 62, 64) et d'ajustement automatique de volume des messages d'alerte provenant du ou des haut-parleurs (50, 62, 64) pour compenser le bruit ambiant ; et
le moyen de surveillance de la température ambiante à chaque haut-parleur (50, 62, 64) comprend un capteur de température (54) situé sur ou adjacent au haut-parleur (50, 62, 64).

2. Système selon la revendication 1 dans lequel le moyen de sortie audiovisuel (20, 22, 24, 26) inclut aussi un écran d'information visuel ou une sirène, et le moyen d'entrée audiovisuel est sélectionné dans le groupe constitué d'un microphone (52), un capteur de déplacement et une caméra (56).

3. Système selon la revendication 1 dans lequel les messages d'alerte sont des messages d'alerte audio ou audiovisuels qui sont téléchargés sur l'ordinateur client (14, 30) puis distribués via l'ordinateur serveur central (12) aux dispositifs périphériques (18) où les messages d'alerte sont stockés et sont prêts à être envoyés au moyen de sortie audiovisuel (20, 22, 24, 26) en réponse à des déclencheurs.

4. Système selon la revendication 1 et incluant en outre un moyen d'évaluation d'une relation positionnelle des haut-parleurs (50, 62, 64) au point de référence central désigné (66) et de synchronisation automatique de la diffusion des messages d'alerte par chaque haut-parleur (50, 62, 64), évitant ou minimisant ainsi toute interférence audio déphasée sur les haut-parleurs (50, 62, 64).

5. Système selon la revendication 3 dans lequel la relation positionnelle des haut-parleurs (50, 62, 64) est entrée sur l'ordinateur client (14, 30) et est stockée sur l'ordinateur serveur central (12).

6. Système selon la revendication 1 dans lequel le dispositif périphérique (18) notifie l'ordinateur serveur central (12) de la température ambiante à son haut-parleur (50, 62, 64), et l'ordinateur serveur central (12) applique la température ambiante au même haut-parleur (50, 62, 64) à un algorithme stocké sur l'ordinateur serveur central (12) qui calcule un ajustement de volume qui est utilisé pour ajuster automatiquement le volume de diffusion des messages d'alerte.

7. Système selon la revendication 1 dans lequel le moyen de surveillance du bruit ambiant à chaque haut-parleur (50, 62, 64) comprend un microphone dédié (52) situé sur ou adjacent au haut-parleur (50, 62, 64).

8. Système selon la revendication 1 dans lequel le bruit ambiant à chaque haut-parleur (50, 62, 64) est reçu par le dispositif périphérique (18) qui commande le fonctionnement du haut-parleur (50, 62, 64), et le dispositif périphérique (18) applique le bruit ambiant au haut-parleur (50, 62, 64) à un algorithme stocké sur le dispositif périphérique (18) qui calcule un ajustement de volume de façon à ajuster automatiquement le volume des messages d'alerte.

9. Système selon la revendication 1 et incluant en outre un moyen de vérification automatique de chaque haut-parleur (50, 62, 64), le moyen de vérification automatique comprenant un microphone de contact (52) situé à l'intérieur de ou adjacent à chaque haut-parleur (50, 62, 64), et un moyen de lancement et de détection d'une transmission audio de vérification provenant de chaque haut-parleur (50, 62, 64) pour évaluer un état opérationnel du haut-parleur (50, 62, 64).

10. Système selon la revendication 9 dans lequel la transmission audio de vérification est un signal double tonalité multifréquence (DTMF) qui est stocké par le dispositif périphérique (18) qui commande le fonctionnement du haut-parleur (50, 62, 64) à vérifier automatiquement.

11. Système selon la revendication 10 dans lequel le lancement du signal du haut-parleur (50, 62, 64) démarre avec une instruction de vérification automatique qui est envoyée de l'ordinateur client (14, 30) à l'ordinateur serveur central (12) lequel ensuite sélectionne de manière aléatoire le dispositif périphérique (18), et le dispositif périphérique sélectionné (18) génère et envoie le signal au haut-parleur (50, 62, 64) pour la diffusion, et dans lequel lorsque le signal est diffusé, le dispositif périphérique (18), en utilisant le microphone de contact (52), surveille la réaction du signal, de telle sorte que si un état de non fonctionnement du haut-parleur (50, 62, 64) est évalué, une alarme est générée et enregistrée sur l'ordinateur serveur central (12) pour faciliter une action corrective.

12. Système selon la revendication 1 et incluant en outre un moyen de fourniture d'une surveillance en direct sur le site, le moyen de fourniture d'une surveillance en direct comprenant une caméra vidéo (56) montée sur ou adjacente à chaque haut-parleur (50, 62, 64), et un moyen de transmission en continu d'un flux vidéo en direct de la caméra vidéo (56) à l'ordinateur client (14, 30) où il peut être visualisé sur un écran d'interface d'utilisateur de l'ordinateur client (14, 30), dans lequel la caméra vidéo (56) est une caméra de télévision en circuit fermé (CCTV) qui fonctionne sur internet, et le moyen de transmission en continu d'un flux vidéo en direct de la caméra vidéo (56) fournit le flux vidéo en direct simultanément à la diffusion des messages d'alerte par le haut-parleur (50, 62, 64), et dans lequel le moyen de transmission en continu d'un flux vidéo en direct de la caméra vidéo (56) fournit le flux vidéo en direct simultanément à la réception d'un flux vidéo en direct du microphone dédié (52) situé sur ou adjacent au haut-parleur (50, 62, 64).

13. Système selon la revendication 1 et incluant en outre un moyen de transmission en continu d'une annonce audio en direct sur le site, comprenant un microphone (52) connecté à l'ordinateur client (14, 30) et activé via une interface d'utilisateur de celui-ci, et un moyen de signalisation à l'ordinateur serveur central (12) que l'annonce audio en direct doit être transmise en continu, puis transmettre en continu l'annonce audio en direct à l'ordinateur serveur central (12) qui synchronise la transmission en continu et envoie l'annonce audio en direct à un ou plusieurs dispositifs périphériques (18), puis envoyer l'annonce audio en direct au ou aux haut-parleurs respectifs (50, 62, 64) où elle est diffusée.

14. Système selon la revendication 1 et incluant en outre une interface de programmation pour permettre à un système informatique d'un tiers de communiquer avec l'ordinateur serveur central (12), grâce à quoi le système informatique d'un tiers est capable d'envoyer des messages d'alerte et d'actionner des notifications directement à l'ordinateur serveur central (12) ou indirectement à l'ordinateur serveur central (12) via l'ordinateur client, après quoi l'ordinateur serveur central (12) envoie les messages d'alerte aux dispositifs périphériques (18) pour la diffusion aux haut-parleurs (50, 62, 64), et grâce à quoi le système informatique d'un tiers est aussi capable de recevoir des notifications de l'ordinateur serveur central (12) que les messages d'alerte ont été diffusés.
